# EUROPEAN PATENT SPECIFICATION

(11) **EP 2 336 896 B1**
(45) Date of publication and mention of the grant of the patent: **22.08.2012**
(21) Application number: 10194273.8
(22) Date of filing: 09.12.2010
(51) Int. Cl.: H04L 12/403, H04L 1/00, H04L 12/40, G06F 13/42

(54) **Serial communication module with multiple receiver/transmitters**
Serielles Kommunikationsmodul mit mehreren Empfängern/Sendern
Module de communication en série avec plusieurs récepteurs/transmetteurs

(30) Priority: 16.12.2009 US 639614
(43) Date of publication of application: 22.06.2011
(73) Proprietor: General Electric Company, Schenectady, NY 12345 (US)
(72) Inventor: Lueckenbach, William Henry, Charlottesville, VA 22911 (US)
(74) Representative: Illingworth-Law, William Illingworth

(56) References cited:
- WO-A1-99/27674
- US-B1- 6 408 334

## Description

### BACKGROUND

The embodiments described herein relate generally to serial communications and, more particularly, to serial communications transmitted via a multiport communication module.

WO 99/27674 discloses a communications system for communicating a serial bit stream. The system includes a first parity generator to generate a first parity bit on the data to be communicated. A second parity generator generates a second parity bit using the communicated data. A comparator then compares the first and second parity bits and a parser parses the received data in response to the comparison.

US 6 408 334 discloses a communications system for multiple computer system management circuits to enable remote management of the computer systems.

At least some known communication networks use a 9-bit serial communication protocol to facilitate minimizing load on slave modules by using a ninth bit of each byte as an indicator bit. For example, in some known communication networks the ninth bit is set to one for command bytes, and is set to zero for data bytes. However, some master modules include receiver/transmitters that do not support a 9-bit communication protocol, but rather require use of an 8-bit communication protocol.

Accordingly, at least some known communication networks use an 8-bit serial communication protocol, wherein a master module uses a single receiver/transmitter to communicate with the slave modules. For each byte to be transmitted to the slave modules, at least some known master modules set a parity bit to indicate whether the byte is a data byte or a command byte. In at least some known master modules, such a configuration requires multiple commands to configure and/or reconfigure the single receiver/transmitter.

### BRIEF DESCRIPTION

In one aspect, a method is provided for implementing serial communications between a master module and at least one slave module in a communications network. The method includes initializing a first receiver/transmitter of the master module to space parity, initializing a second receiver/transmitter of the master module to mark parity, and determining whether a first byte of a message is a command byte or a data byte. If the first byte is a data byte, the first byte is transmitted to the at least one slave module using the first receiver/transmitter. If the first byte is a command byte, the first byte is transmitted to the at least one slave module using the second receiver/transmitter.

In another aspect, a serial communication system is provided. The serial communication system includes a plurality of slave modules and a master module. The master module includes a first port and a second port, wherein each of the first and second ports are coupled to each of the slave modules. The master module is configured to initialize the first port to space parity, initialize the second port to mark parity, transmit at least one data byte to at least one of the slave modules via the first port, and transmit at least one command byte to at least one of the slave modules via the second port.

In another aspect, a master device is provided for use with a serial communication system. The master device includes a multiport communication module and a microprocessor. The multiport communication module includes a first universal asynchronous receiver/transmitter (UART) coupled to a plurality of slave modules via a network, a second UART coupled to the slave modules via the network. The microprocessor is coupled to the first and second UARTs via a bus, and is configured to initialize the first UART to space parity, initialize the second UART to mark parity, transmit at least one data byte within a message to at least one of the slave modules via the first UART, and transmit at least one command byte within the message to at least one of the slave modules via the second UART.

### BRIEF DESCRIPTION OF THE DRAWINGS

The embodiments described herein may be better understood by referring to the following description in conjunction with the accompanying drawings.
FIG. 1 is a schematic block diagram of a serial communication system.
FIG. 2 is a flowchart illustrating an exemplary method of implementing serial communications within the serial communication system shown in FIG. 1.

### DETAILED DESCRIPTION

In some embodiments, the term "microprocessor" refers generally to any programmable system including systems and microcontrollers, reduced instruction set circuits (RISC), application specific integrated circuits (ASIC), programmable logic circuits (PLC), and any other circuit or processor capable of executing the functions described herein. The above examples are exemplary only, and thus are not intended to limit in any way the definition and/or meaning of the term processor.

In some embodiments, the term "module" refers generally to any device that enables a serial communication via a network. Exemplary devices include computers, microcontrollers, sensors, and the like. The above examples are exemplary only, and thus are not intended to limit in any way the definition and/or meaning of the term module. Moreover, it should be understood that the term "module" may be used interchangeably with the term "node."

In some embodiments, the term "network" refers generally to any multidrop network that includes at least one master and one or more slaves. Exemplary multidrop networks include, but are not limited to only including, RS-485 networks and RS-232 networks. However, any suitable network may be used in the embodiments described herein.

In some embodiments, the term "port" refers generally to a communication port, such as a serial port, that transmits and/or receives data. Exemplary communication ports include, but are not limited to only including, universal asynchronous receiver/transmitters (UARTs) and universal synchronous receiver/transmitters (USARTs). However, any suitable communication port may be used in the embodiments described herein.

Described in detail herein are exemplary embodiments of methods, systems, and apparatus that facilitate using two ports of a multiport communication module to transmit data over a 9-bit network using 8-bit UARTs. Using two ports facilitates decreasing a delay between transmissions of each byte from a master to a slave.

Decreasing such a delay facilitates decreasing overall transmission times of messages within a multidrop network using multiport communication modules.

Exemplary technical effects of the embodiments described herein include at least one of: (a) determining a network address of a desired slave module; (b) transmitting the network address to a plurality of slave modules coupled to a master module via a network; (c) initializing a first master module UART to space parity; (d) initializing a second master module UART to mark parity; (e) determining whether a message has been stored for transmission to the desired slave module; (f) if a message is not stored, periodically re-determining whether a message has been stored for transmission or, if a message is stored, determining whether a first byte in the message is a data byte or a command byte; (g) if the first byte is a data byte, transmitting the first byte to the slave module via the first UART or, if the first byte is a command byte, transmitting the first byte to the slave module via the second UART; (h) determining whether the message includes additional bytes; and (i) if the message does include additional bytes, determining whether a subsequent byte is a data byte or command byte or, if the message does not include additional bytes, determining whether a subsequent message has been stored for transmission to the same desired slave module or to a different desired slave module.

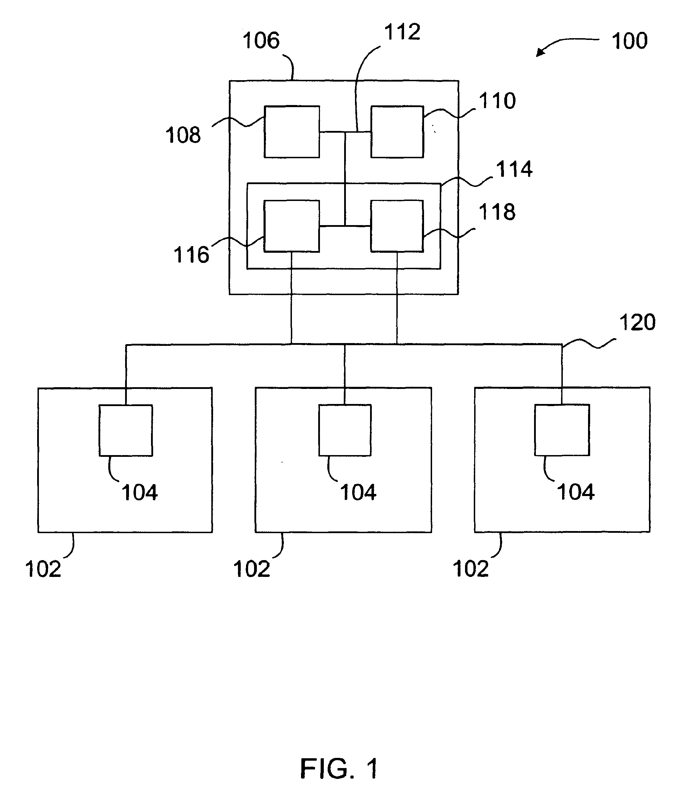

FIG. 1 is a schematic block diagram of a serial communication system 100 that may be used in, for example, a high-speed communication network to facilitate reducing communication time and minimizing a probability of a message time out error. In the exemplary embodiment, system 100 includes a plurality of slave modules 102 that each includes a communication port 104. Exemplary slave modules 102 include sensors, such as temperature and/or pressure sensors, although any suitable device may be used as slave module 102 that includes communication port 104. In the exemplary embodiment, port 104 is a universal asynchronous receiver/transmitter (UART), such as an 8-bit UART. System 100 also includes a master module 106. Exemplary master modules 106 include computers and automation controllers. However, any suitable device may be used as master module 106.

In the exemplary embodiment, master module 106 includes a microprocessor 108 and a memory 110 coupled to microprocessor 108 via a bus 112. In some embodiments, master module 106 may include more than one microprocessor 108 and/or more than one memory 110. In the exemplary embodiment, master module 106 also includes a multiport communication module 114 that includes at least a first communication port 116 and a second communication port 118. In the exemplary embodiment, first communication port 116 and second communication port 118 is a UART, such as an 8-bit UART.

Moreover, in the exemplary embodiment, system 100 includes a network 120 that couples, such as communicatively or operatively couples, master module 106 and each slave module 102. More specifically, network 120 couples first communication port 116 and second communication port 118 of master module 106 to port 104 of each slave module 102. Exemplary networks 120 include RS-485 networks. However, any suitable multidrop network may be used as network 120.

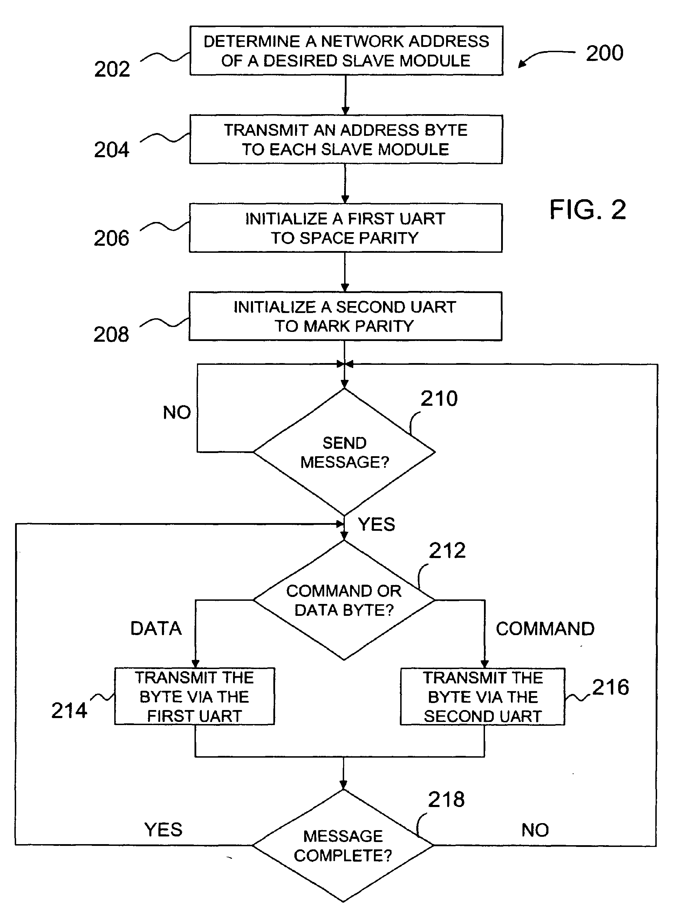

FIG. 2 is a flowchart 200 illustrating an exemplary method of implementing serial communications within a system, such as serial communication system 100 (shown in FIG. 1). Referring to FIG. 1, and in the exemplary embodiment, master module 106 determines 202 a network address of a desired slave module 102. More specifically, microprocessor 108 determines the network address of the desired slave module 102 in memory 110. For example, in some embodiments, memory 110 may include a lookup table that lists an identifier and a network address for each slave module 102.

In the exemplary embodiment, master module 106 transmits 204 an address byte to each slave module 102 via network 120, wherein the address byte includes the network address byte associated with the desired slave module 102. Master module 106 may transmit the address byte using either first communication port 116 or second communication port 118. Each slave module 102 receives the address byte and determines whether the network address included within the address byte matches its own network address. Slave modules 102 with non-matching network addresses ignore any future messages or bytes until another address byte is transmitted by master module 106 via network 120. The desired slave module 102 waits for additional bytes including commands or data.

In the exemplary embodiment, master module 106 initializes 206 first communication port 116 to space parity, and initializes 208 second communication port 118 to mark parity. Specifically, microprocessor 108 initializes first communication port 116 such that a parity bit is set to zero, and initializes second communication port 118 such that a parity bit is set to one. Once first communication port 116 and second communication port 118 are each initialized to its respective parity, master module 106 determines 210 whether there exists a message to be transmitted to the desired slave device 102. In some embodiments, messages are queued in memory 110 based on, for example, a priority assigned to each message and/or a type of message. Accordingly, microprocessor 108 determines whether memory 110 currently stores a message that is to be transmitted to the desired slave module 102 via network 120. If no message is stored for transmission to the desired slave module 102, microprocessor 108 periodically re-determines whether a message has been stored.

When a message is stored for transmission, master module 106 determines 212 whether a first byte of the message is a command byte or a data byte. Specifically, microprocessor 108 detects whether a final bit of the first byte is a zero or a one. If the final bit is a zero, microprocessor 108 detects that the first byte is a data byte. If the final bit is a one, microprocessor 108 detects that the first byte is a command byte. Use of a different communication protocol enables different parity settings. Accordingly, in an alternative embodiment, each data byte has a final bit with a value of one, and each command byte has a final bit with a value of zero. Moreover, in another alternative embodiment, master module 106 is configured to transmit any suitable 8-bit message via first communication port 116 or second communication port 118 using any suitable 9-bit protocol. For example, first communication port 116 may transmit any suitable 8-bit message by adding a ninth bit to the message according to the parity assigned to first communication port 116, such as space parity. Similarly, second communication port 118 may transmit any suitable 8-bit message by adding a ninth bit to the message according to the parity assigned to second communication port 118, such as mark parity.

In the exemplary embodiment, and when the first byte is determined to be a data byte, master module 106 transmits 214 the first byte to the desired slave module 102 via first communication port 116 and network 120. Specifically, microprocessor 108 retrieves the first byte from memory 110 and transmits the first byte to slave module port 104 via first communication port 116 and network 120. When the first byte is determined to be a command byte, master module 106 transmits 216 the first byte to the desired slave module 102 via second communication port 118 and network 120. Specifically, microprocessor 108 retrieves the first byte from memory 110 and transmits the first byte to slave module port 104 via second communication port 118 and network 120. The remaining slave modules 102 in system 100 ignore the first byte.

After transmitting the first byte, master module 106 determines 218 whether the message is complete. Specifically, microprocessor 108 determines whether memory 110 currently stores additional bytes associated with the message that is to be transmitted to the desired slave module 102. If no additional bytes are stored for transmission to the desired slave module 102, microprocessor 108 re-determines 210 whether a message has been stored in memory 110. In an alternative embodiment, microprocessor 108 re-determines 202 a network address of a different desired slave module 102. If memory 110 does have additional bytes stored for transmission to the desired slave module 102, microprocessor 108 re-determines 212 whether the next byte is a data byte or a command byte.

Exemplary embodiments of methods, systems, and apparatus for use in serial communication systems are described above in detail. The methods, systems, and apparatus are not limited to the specific embodiments described herein but, rather, operations of the methods and/or components of the systems or apparatus may be utilized independently and separately from other operations and/or components described herein. Further, the described operations and/or components may also be defined in, or used in combination with, other systems, methods, and/or apparatus, and are not limited to practice with only the methods, systems, and storage media as described herein.

Although embodiments are described in connection with an exemplary serial communication environment, embodiments are operational with numerous other general purpose or special purpose serial communication environments or configurations. The serial communication environment is not intended to suggest any limitation as to the scope of use or functionality of any aspect of the embodiments described herein. Moreover, the serial communication environment should not be interpreted as having any dependency or requirement relating to any one or combination of components illustrated in the exemplary operating environment. Examples of well known serial communication systems, environments, and/or configurations that may be suitable for use with the embodiments described herein include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

The order of execution or performance of the operations in the embodiments illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the described embodiments.

When introducing elements of aspects of the invention or embodiments thereof, the articles "a," "an," "the," and "said" are intended to mean that there are one or more of the elements. The terms "comprising," including," and "having" are intended to be inclusive and mean that there may be additional elements other than the listed elements.

This written description uses examples to disclose the invention, including the best mode, and also to enable any person skilled in the art to practice the invention, including making and using any devices or systems and performing any incorporated methods.

## Claims

1. A serial communication system (100) comprising:
a plurality of slave modules (102); and
a master module (106) comprising a first port (116) and a second port (118), each of said first port and said second port coupled to each of said plurality of slave modules, said master module configured to:
initialize said first port to space parity (206);
initialize said second port to mark parity (208);
transmit at least one data byte to at least one of said plurality of slave modules via said first port (214); and
transmit at least one command byte to at least one of said plurality of slave modules via said second port (216).

2. A serial communication system (100) in accordance with Claim 1, wherein said master module (106) further comprises a memory (110) configured to store an address associated with each slave module (102).

3. A serial communication system (100) in accordance with Claim 1 or Claim 2, wherein said master module (106) is further configured to determine an address associated with a specified slave module (102) of said plurality of slave modules.

4. A serial communication system (100) in accordance with any preceding Claim, wherein said master module (106) is further configured to transmit an address byte to said plurality of slave modules (102), the address byte including the address of said specified slave module.

5. A serial communication system (100) in accordance with any preceding Claim, wherein said master module (106) is further configured to determine a byte type within a message based on a last bit of each byte.

6. A serial communication system (100) in accordance with any preceding Claim, wherein said master module (106) is further configured to:
transmit an initial byte of a message to a specified slave module (102) of said plurality of slave modules via one of said first port (116) and said second port (118); and
determine whether the message includes additional bytes to be transmitted to said specified slave module.

7. A master device for use with a communication network (120), said master device comprising:
a multiport communication module (114) comprising:
a first universal asynchronous receiver/transmitter (UART) coupled to a plurality of slave modules (102) via a network;
a second UART coupled to the plurality of slave modules via the network; and
a microprocessor (108) coupled to said first UART and said second UART via a bus (112), said microprocessor configured to:
initialize said first UART to space parity (206);
initialize said second UART to mark parity (208);
transmit at least one data byte within a message to at least one of the plurality of slave modules via said first UART (214); and
transmit at least one command byte within the message to at least one of the plurality of slave modules via said second UART (216).

8. A master device in accordance with Claim 7, further comprising a memory (110) configured to store an address associated with each slave module (102).

9. A master device in accordance with Claim 7 or Claim 8, wherein said microprocessor (108) is further configured to determine an address associated with a specified slave module (102) of the plurality of slave modules.

10. A master device in accordance with any of Claims 7 to 9, wherein said microprocessor (108) is further configured to transmit an address byte to the plurality of slave modules (102), the address byte including the address of the specified slave module.

11. A method of implementing serial communications between a master module and at least one slave module in a communications network, said method comprising:
initializing a first receiver/transmitter of the master module to space parity (206);
initializing a second receiver/transmitter of the master module to mark parity (208);
determining whether a first byte of a message is a command byte or a data byte (212);
if the first byte is a data byte, transmitting the first byte to the at least one slave module using the first receiver/transmitter (214); and
if the first byte is a command byte, transmitting the first byte to the at least one slave module using the second receiver/transmitter (216).

12. A method in accordance with Claim 11, further comprising determining an address of the at least one slave module.

13. A method in accordance with Claim 11 or Claim 12, further comprising transmitting an address byte to the at least one slave module, the address byte including the address of the at least one slave module.

14. A method in accordance with any of Claims 11 to 12, wherein initializing a first receiver/transmitter comprises setting a parity bit to zero.

15. A method in accordance with any of Claims 11 to 14, wherein initializing a second receiver/transmitter comprises setting a parity bit to one.

## Patentansprüche

1. Serielles Kommunikationssystem (100), aufweisend:
mehrere Slave-Module (102); und
ein Master-Modul (106), das einen ersten Port (116) und einen zweiten Port (118) aufweist, wobei jeder von dem ersten Port und dem zweiten Port mit jedem von den mehreren Slave-Modulen verbunden ist, wobei das Master-Modul dafür eingerichtet ist:
den ersten Port auf O-Parität (Space-Parität) zu initialisieren, (206);
den zweiten Port auf 1-Parität (Mark-Parität) zu initialisieren, (208);
wenigstens ein Datenbyte an wenigstens eines von den mehreren Slave-Modulen über den ersten Port zu übertragen, (214); und
wenigstens ein Befehlsbyte an wenigstens eines von den mehreren Slave-Modulen über den zweiten Port zu übertragen, (216);

2. Serielles Kommunikationssystem (100) nach Anspruch 1, wobei das Master-Modul (106) ferner einen Speicher (110) aufweist, der dafür eingerichtet ist, eine jedem Slave-Modul (102) zugeordnete Adresse zu speichern.

3. Serielles Kommunikationssystem (100) nach Anspruch 1 oder Anspruch 2, wobei das Master-Modul (106) ferner dafür eingerichtet ist, eine einem spezifizierten Slave-Modul (102) von den mehreren Slave-Modulen zugeordnete Adresse zu bestimmen.

4. Serielles Kommunikationssystem (100) nach einem der vorstehenden Ansprüche, wobei das Master-Modul (106) ferner dafür eingerichtet ist, ein Adressenbyte an die mehreren Slave-Module (102) zu senden, wobei das Adressenbyte die Adresse des spezifizierten Slave-Moduls enthält.

5. Serielles Kommunikationssystem (100) nach einem der vorstehenden Ansprüche, wobei das Master-Modul (106) ferner dafür eingerichtet ist, einen Bytetyp in einer Nachricht auf der Basis eines letzten Bits jedes Bytes zu bestimmen.

6. Serielles Kommunikationssystem (100) nach einem der vorstehenden Ansprüche, wobei das Master-Modul (106) ferner dafür eingerichtet ist:
ein Anfangsbyte einer Nachricht an ein spezifiziertes Slave-Modul (102) von den mehreren Slave-Modulen über einen von dem ersten Port (116) und dem zweiten Port (118) zu senden; und
zu bestimmen, ob die Nachricht zusätzliche an das spezifizierte Slave-Modul zu übertragende Bytes enthält.

7. Master-Vorrichtung zur Verwendung mit einem Kommunikationsnetzwerk (120), wobei die Master-Vorrichtung aufweist:
ein Multiport-Kommunikationsmodul (114), das aufweist:
einen ersten universellen asynchronen Sender/Empfänger (UART), der mit mehreren Slave-Modulen (102) über ein Netzwerk verbunden ist;
einen zweiten UART, der mit den mehreren Slave-Modulen über das Netzwerk verbunden ist; und
einen Mikroprozessor (108), der mit dem ersten UART und dem zweiten UART über einen Bus (112) verbunden ist, wobei der Mikroprozessor dafür eingerichtet ist:
den ersten UART auf O-Parität zu initialisieren, (206);
den zweiten UART auf 1-Parität zu initialisieren, (208);
wenigstens ein Datenbyte in einer Nachricht an wenigstens eines von den mehreren Slave-Modulen über den ersten UART zu senden, (214); und
wenigstens ein Befehlsbyte in der Nachricht an wenigstens eines von den mehreren Slave-Modulen über den zweiten UART zu senden, (216).

8. Master-Vorrichtung nach Anspruch 7, die ferner einen Speicher (110) aufweist, der dafür eingerichtet ist, eine jedem Speichermodul (102) zugeordnete Adresse zu speichern.

9. Master-Vorrichtung nach Anspruch 7 oder Anspruch 8, wobei der Mikroprozessor (108) ferner dafür eingerichtet ist, eine einem spezifizierten Slave-Modul (102) von den mehreren Slave-Modulen zugeordnete Adresse zu bestimmen.

10. Master-Vorrichtung nach einem der Ansprüche 7 bis 9, wobei der Mikroprozessor (108) ferner dafür eingerichtet ist, ein Adressbyte an die mehreren Slave-Module (102) zu senden, wobei das Adressbyte die Adresse des spezifizierten Slave-Moduls enthält.

11. Verfahren zum Implementieren serieller Übertragungen zwischen einem Master-Modul und wenigstens einem Slave-Modul in einem Kommunikationsnetzwerk, wobei das Verfahren die Schritte aufweist:
Initialisieren eines ersten Empfängers/Senders des Master-Moduls auf 0-Parität, (206);
Initialisieren eines zweiten Empfängers/Senders des Master-Moduls auf 1-Parität, (208);
Bestimmen, ob ein erstes Byte einer Nachricht ein Befehlsbyte oder Datenbyte ist, (212);
wenn das erste Byte ein Datenbyte ist, Senden des ersten Datenbytes an das wenigstens eine Slave-Modul unter Verwendung des ersten Empfängers/Senders, (214); und
wenn das erste Byte ein Befehlsbyte ist, Senden des ersten Bytes an das wenigstens eine Slave-Modul unter Verwendung des zweiten Empfängers/Senders, (216).

12. Verfahren nach Anspruch 11, ferner mit dem Schritt der Bestimmung der Adresse des wenigstens einen Slave-Moduls.

13. Verfahren nach Anspruch 11 oder Anspruch 12, ferner mit dem Schritt des Sendens eines Adressbytes an das wenigstens eine Slave-Modul, wobei das Adressbyte die Adresse des wenigstens einen Slave-Moduls enthält.

14. Verfahren nach einem der Ansprüche 11 bis 13, wobei die Initialisierung eines ersten Empfängers/Senders den Schritt des Setzens eines Paritätsbits auf 0 aufweist.

15. Verfahren nach einem der Ansprüche 11 bis 14, wobei die Initialisierung eines ersten Empfängers/Senders den Schritt des Setzens eines Paritätsbits auf 1 aufweist.

## Revendications

1. Système de communication série (100) comprenant :
une pluralité de modules esclaves (102) ; et
un module maître (106) comprenant un premier port (116) et un second port (118), chacun dudit premier port et dudit second port étant couplé à chacun desdits modules esclaves, ledit module maître étant configuré pour :
initialiser ledit premier port à parité espace (206) ;
initialiser ledit second port à parité marque (208) ;
envoyer au moins un octet de données à au moins un desdits modules esclaves par ledit premier port (214) ; et
envoyer au moins un octet de commande à au moins un desdits modules esclaves par ledit second port (216).

2. Système de communication série (100) selon la revendication 1, dans lequel ledit module maître (106) comprend en outre une mémoire (110) configurée pour stocker une adresse associée à chaque module esclave (102).

3. Système de communication série (100) selon la revendication 1 ou la revendication 2, dans lequel ledit module maître (106) est en outre configuré pour déterminer une adresse associée à un module esclave spécifié (102) de ladite pluralité de modules esclaves.

4. Système de communication série (100) selon l'une quelconque des revendications précédentes, dans lequel ledit module maître (106) est en outre configuré pour envoyer un octet d'adresse à ladite pluralité de modules esclaves (102), l'octet d'adresse comprenant l'adresse dudit module esclave spécifié.

5. Système de communication série (100) selon l'une quelconque des revendications précédentes, dans lequel ledit module maître (106) est en outre configuré pour déterminer un type d'octet dans un message sur la base d'un dernier bit de chaque octet.

6. Système de communication série (100) selon l'une quelconque des revendications précédentes, dans lequel ledit module maître (106) est en outre configuré pour :
envoyer un octet initial d'un message à un module esclave spécifié (102) de ladite pluralité de modules esclaves par l'un dudit premier port (116) et dudit second port (118) ; et
déterminer si le message comprend des octets supplémentaires à envoyer audit module esclave spécifié.

7. Dispositif maître destiné à être utilisé avec un réseau de communication (120), ledit dispositif maître comprenant :
un module de communication multiport (114) comprenant :
un premier émetteur/récepteur universel asynchrone (UART) couplé à une pluralité de modules esclaves (102) par un réseau ;
un second UART couplé à la pluralité de modules esclaves par le réseau; et
un microprocesseur (108) couplé audit premier UART et audit second UART par un bus (112), ledit microprocesseur étant configuré pour :
initialiser ledit premier UART à parité espace (206) ;
initialiser ledit second UART à parité marque (208) ;
envoyer au moins un octet de données d'un message à au moins un des modules esclaves par ledit premier UART (214) ; et
envoyer au moins un octet de commande du message à au moins un des modules esclaves par ledit second UART (216).

8. Dispositif maître selon la revendication 7, comprenant en outre une mémoire (110) configurée pour stocker une adresse associée à chaque module esclave (102).

9. Dispositif maître selon la revendication 7 ou la revendication 8, dans lequel ledit microprocesseur (108) est en outre configuré pour déterminer une adresse associée à un module esclave spécifié (102) de la pluralité de modules esclaves.

10. Dispositif maître selon l'une quelconque des revendications 7 à 9, dans lequel ledit microprocesseur (108) est en outre configuré pour envoyer un octet d'adresse à la pluralité de modules esclaves (102), l'octet d'adresse comprenant l'adresse du module esclave spécifié.

11. Procédé de mise en oeuvre de communications série entre un module maître et au moins un module esclave dans un réseau de communication, ledit procédé comprenant :
l'initialisation d'un premier émetteur/récepteur du module maître à parité espace (206) ;
l'initialisation d'un second émetteur/récepteur du module maître à parité marque (208) ;
la détermination du fait qu'un premier octet d'un message est un octet de commande ou un octet de données (212) ;
si le premier octet est un octet de données, l'envoi du premier octet à l'au moins un module esclave par le premier émetteur/récepteur (214) ; et
si le premier octet est un octet de commande, l'envoi du premier à l'au moins un module esclave par le second émetteur/récepteur (216).

12. Procédé selon la revendication 11, comprenant en outre la détermination d'une adresse de l'au moins un module esclave.

13. Procédé selon la revendication 11 ou la revendication 12, comprenant en outre l'envoi d'un octet d'adresse à l'au moins un module esclave, l'octet d'adresse comprenant l'adresse de l'au moins un module esclave.

14. Procédé selon l'une quelconque des revendications 11 à 12, dans lequel l'initialisation d'un premier émetteur/récepteur comprend le réglage d'un bit de parité à zéro.

15. Procédé selon l'une quelconque des revendications 11 à 14, dans lequel l'initialisation d'un second émetteur/récepteur comprend le réglage d'un bit de parité à un.
